Europäisches Patentamt

European Patent Office

Office européen des brevets

(19)

(11)  **EP 0 500 199 B1**

(12)  **EUROPÄISCHE PATENTSCHRIFT**

(45) Veröffentlichungstag und Bekanntmachung des
Hinweises auf die Patenterteilung:
**10.04.1996  Patentblatt 1996/15**

(51) Int. Cl.⁶: **B03B 9/00**,  B09B 1/00,
B09B 3/00,  C02F 11/12,
C04B 18/04,  C04B 28/00

(21) Anmeldenummer: **92250024.4**

(22) Anmeldetag: **06.02.1992**

(54) **Verfahren zum Aufbereiten von kontaminierten Gewässersedimenten**

Process for treating contaminated sediments from water

Procédé pour le traitement des alluvions contaminées

(84) Benannte Vertragsstaaten:
**AT BE DE DK ES FR GB IT LU NL SE**

(30) Priorität: **20.02.1991 DE 4105707**

(43) Veröffentlichungstag der Anmeldung:
**26.08.1992  Patentblatt 1992/35**

(73) Patentinhaber: **DETLEF HEGEMANN GmbH & Co.**
**D-28309 Bremen (DE)**

(72) Erfinder:
• **Hartmann, Volker**
**W-2819 Thedinghausen (DE)**

• **Poschenrieder, Manfred**
**W-8411 Zeitlarn (DE)**

(74) Vertreter: **Hoormann, Walter, Dr.-Ing. et al**
**FORRESTER & BOEHMERT**
**Franz-Joseph-Strasse 38**
**D-80801 München (DE)**

(56) Entgegenhaltungen:
**EP-A- 0 120 097**          **EP-A- 0 250 639**
**DE-A- 3 150 419**          **DE-A- 3 732 961**

**Beschreibung**

Die Erfindung betrifft ein Verfahren zum Aufbereiten von kontaminierten Gewässersedimenten zu einem dauerhaft umweltverträglich auf einer Haldendeponie deponierbaren Material bzw. einem umweltverträglichen Baumaterial, insbesondere für Dichtungsschichten.

Insbesondere in der Praxis häufig auch kurz als Schlick bezeichnete Gewässersedimente, wie sie regelmäßig bei Baggerarbeiten in Hafenbecken, Fahrrinnen u.dgl. anfallen, sind heutzutage leider sehr häufig durch vor- und nachstehend auch kurz als "Schadstoffe" bezeichnete anthropogene Verunreinigungen belastet, bei denen es sich i.d.R. überwiegend um komplexgebundene Schwermetallionen und/oder andere häufig äußerst schädliche organische Verbindungen unterschiedlichster chemischer Art handelt. Dieses hat zur Folge, daß man bei Baggerarbeiten od. dgl. anfallende Gewässersedimente keineswegs bedenkenlos auf Halden deponieren kann, wie dieses früher üblich war und auch heute noch in nicht unerheblichen Ausmaße geschieht, da die in den Gewässersedimenten vorhandenen Schadstoffe im Verlaufe der Zeit durch Auswaschung ins Grundwasser gelangen und diese mit hinlänglich bekannten Folgen belasten können.

Es kommt hinzu, daß anfallende Gewässersedimente - selbst wenn sie in Trocknungsfeldern zwischengelagert und insbesondere durch Verdunstung natürlich entwässert werden - die notwendigen Kriterien einer Deponierfähigkeit in bodenmechanischer Hinsicht bzgl. Stand- und Dauerfestigkeit, Befahrbarkeit etc. regelmäßig nicht erfüllen.

Aufgrund der oben kurz angesprochenen negativen Eigenschaften scheiden häufig in erheblichen Mengen anfallende Gewässersedimente aus den gleichen Gründen und bei gleicher Aufarbeitung durch Entwässerung ersichtlich auch als Baumaterial (bspw. für Dichtungsmassen) aus, weil sie auch bei einer solchen Verwendung die gleichen negativen Wirkungen entfalten und/oder nicht die erforderlichen Festigkeitseigenschaften aufweisen.

Aus der DE-A-37 32 961 ist es bekannt, eine bei einer bestimmten, mehrstufigen Aufbereitung von Gewässersedimenten anfallende, mineralische Feinfraktion einer Körnung bis etwa 0,06 mm durch Zugabe von Natriumsilikat als Konditionierungsmittel und Poren füllendem Tonmehl als Stabilisierungsmittel als Deponie-Basis- oder Oberflächen-Dichtungsmaterial verwendbar zu machen.

Weiterhin ist es aus der DE-A-31 50 419 bekannt, u.a. schlammige, umweltschädliche Stoffe enthaltende Abfälle mit Bindemitteln wie Zement, Bentonit oder Branntkalk zu versetzen und zu kugelförmigen Körpern unterschiedlicher Durchmesser zu pelletisieren, die anschließend für einen Transport, ein Recycling oder eine Langzeitlagerung miteinander vermischt werden.

Der vorliegenden Erfindung liegt daher die Aufgabe zugrunde, ein Verfahren zu schaffen, mit dem kontaminierte Gewässersedimente (= Schlick) zu einem dauerhaft umweltverträglich auf einer Haldendeponie deponierbaren Material bzw. einem alsbald verwendbaren, umweltverträglichen Baumaterial, insbesondere für Dichtungsschichten, aufzubereiten sind. Die Lösung des verfahrensmäßigen Teils der vorstehenden Aufgabe ist erfindungsgemäß dadurch gekennzeichnet, daß die zu konditionierenden kontaminierten Gewässersedimente zunächst (natürlich oder/und mechanisch) auf einen Wassergehalt von maximal ca. 140 % bezogen (vorzugsweise maximal ca. 120 %) auf ihr Trockengewicht entwässert werden, daß die (etwa wenigstens) insoweit entwässerten Gewässersedimente sodann weitgehend homogen (vor-)zerkleinert (und vorzugsweise belüftet) werden (wobei das Belüften der Gewässersedimente bevorzugt beim Zerkleinerungsvorgang erfolgt), und daß die zerkleinerten (und ggf. belüfteten) Gewässersedimente mit - bezogen auf ihr Trockengewicht - ca. 4 bis 15 % kaolinitischem Tonmehl zu einer (Sediment-Kaolinit-)Mischung homogen vermischt werden.

Bezüglich des Tonmehls Kaolinit hat sich gezeigt, daß dieses vorteilhafterweise nicht quellfähig ist, wobei diese natürliche Eigenschaft dem feinkörnigen Kaolinit eine kristallchemische Stabilität und geochemische Resistenz verleiht. Durch die nicht vorhandene Möglichkeit eines innerkristalinen Quellens kann demgemäß keine Ionendiffusion stattfinden.

Es hat sich bspw. gezeigt, daß die für Abdichtungsmaßnahmen erforderlichen $k_f$-Werte von $10^{-10}$ m/s bei Verwendung von kaolinitischem Ton(mehl) ohne weiteres erreicht werden, und daß die hiermit hergestellten Massen weiterhin eine Restplastizität besitzen, um bspw. dem Setzungsdruck des Deponiegutes ohne Rißbildung nachgeben zu können.

Auf den hydratsbeladenen Plättchenoberflächen der Kaolinite findet keine nennenswerte Korrosion statt. Lediglich an den Kornrändern kann es zu einem Ionenaustausch und Absorptionen kommen. Die durch Fällungsreaktionen entstehenden Produkte werden sowohl im amorphen Zustand erstarren als auch in feinstkörniger Form in den feinen Poren abgeschieden. Durch das ungeregelte Wachstum dieser Porenzemente wird die Durchlässigkeit ($k_f$-Wert) der konditionierten Gewässersedimente weiter herabgesetzt sowie die Langzeitstabilität gewährleistet bzw. erhöht.

Durch Absorption organischer Verbindungen wird die Stabilität ebenfalls nicht beeinträchtigt. Organische Bestandteile in den Gewässersedimenten bis ca. 20 % haben aufgrund der spezifischen Eigenschaften der kaolinitischen Tonmehle keine negativen Auswirkungen auf die Langzeitstabilität.

Gemäß einer höchst bevorzugten Ausgestaltung der vorliegenden Erfindung erfolgt eine Verwendung eines (zumindest weitgehend) karbonatfreien kaolinitischen Tonmehls.

Wenn vor- oder nachstehend von einem kaolinitischen Tonmehl die Rede ist, so ist hiermit gemäß einer bevorzugten Ausgestaltung der vorliegenden Erfindung ein solches Tonmehl mit einer Mahlfeinheit von 0 bis ca. 1,5 mm gemeint, wobei das kaolinitische Tonmehl bevorzugt mit mindestens ca. 70 % Kornanteil von 0 bis 0,002 mm versehen ist, also einem sehr erheblichen höchstfeinen Kornanteil.

Gemäß einer weiteren verfahrensmäßigen Ausgestaltung, die bei der Aufbereitung insbesondere auf eine Herstellung für ein Baumaterial abstellt, wie es beispielsweise für Randdämme, Straßenbefestigungen u.dgl. geeignet ist, die alsbald bzw. unverzüglich nach ihrer Erstellung eine (gegenüber Haldenablagerungen) erhöhte (und zudem dauerhafte) Festigkeit aufweisen müssen, zeichnet sich dadurch aus, daß der (Sediment-Kaolinit-)Mischung - bezogen auf das Trockengewicht der Gewässersedimente - ca. 1 bis 15 % Kalkhydrat homogen zugemischt werden, wobei die Kalkhydratzugabe bei einem hohen Wassergehalt entsprechend höher ist als bei einem niedrigen.

Bei einer anderen Ausgestaltung des erfindungsgemäßen Verfahrens, die auf das gleiche Ziel abhebt, kann der (Sediment-)Kaolinit-Mischung - bezogen auf das Trockengewicht der Gewässersedimente - ca. 1 bis 15 % Zement homogen zugemischt werden, wobei auch hier wiederum die Höhe der Zementzugabe bei einem hohen Wassergehalt entsprechend höher ist als bei einem niedrigen.

Zu den beiden vorstehend erwähnten Ausgestaltungen sei angemerkt, daß kaolinitische Tone relativ rasch mit hydraulischen Zuschlägen reagieren und zu chemischen Zementen führen, und zwar im wesentlichen nach dem Reaktionschema:

$$\text{Tonmineral} + \text{Zement/Kalkhydrat} = \text{Ca-Tonmineral} + \text{Neubildung.}$$

Das dabei entstehende Reaktionsprodukt stellt eine komplex zusammengesetzte Mischung aus Tonmineralen (hervorgegangen aus dem primären Gewässerschlick und dem Tonzusatz), neugebildeten hydratisierten Ca/Al-Silikaten, Metallhydroxiden und organischen Komplexen dar und ist in sich chemisch stabil, wenn die Wasserzufuhr eingeschränkt oder völlig unterbunden wird.

Man könnte die Wirkung einer Zugabe von Zement und/oder Kalkhydrat funktionsmäßig auch so beschreiben, daß diese Zugaben gleichsam die Aufgabe und Wirkung eines "Starters" haben, um insbesondere bei bestimmten Bauteilen wie Randdämmen, Straßenbefestigungen u.dgl. die mehr oder weniger sofort notwendige Festigkeit unverzüglich und dabei zugleich dauerhaft zu erzielen.

Für eine Aufbereitung von Gewässersedimenten zur Gewinnung eines Baumaterials für Dichtungsschichten hat es sich bei einer Ausgestaltung der Erfindung bewährt, wenn der (Sediment-Kaolinit-)Mischung - bezogen auf das Trockengewicht der eingesetzten Gewässersedimente - ca. 1 bis 8 % Kalkhydrat und ca. 1 bis 8 % Zement zugemischt werden.

Grundsätzlich hat es sich weiterhin als höchst zweckmäßig herausgestellt, wenn die bei der Aufbereitung erhaltene Mischung - ganz gleich, ob den aufzubereitenden Gewässersedimenten nur kaolinitisches Tonmehl oder darüber hinaus auch Zement oder/und Kalkhydrat homogen zugemischt worden ist - vor einer Deponierung (und vorzugsweise auch vor einer Weiterverarbeitung als Baumaterial) zwischengelagert wird, und zwar vorzugsweise wenigstens einen Tag, wobei es sich weiterhin als zweckmäßig erwiesen hat, wenn das insoweit aufbereitete Gut bei der Zwischenlagerung vor Witterungseinflüssen (insbesondere Niederschlägen) geschützt wird.

Eine sowohl technisch wie auch wirtschaftlich höchst interessante Modifikation des erfindungsgemäßen Verfahrens besteht darin, daß den zerkleinerten und vorzugsweise belüfteten Gewässersedimenten feinkörnige und/oder flüssige Silikate homogen beigemischt werden, und zwar bevorzugt industrielle Fällungskieselsäure, bevorzugt bis zu ca. 3 % bezogen auf das Trockengewicht der Gewässersedimente, wobei sich gezeigt hat, daß in bestimmten Fällen (insbesondere bei relativ stark entwässerten Sedimenten mit günstigem Kornaufbau) ein Fällungskieselsäureanteil von ca. bis zu 1,5 % bis herunter zu 0,2 % bereits ausreichend sein kann.

Obwohl auch gleichsam eine Kombination mit Zement- und/oder Kalkhydrat-Zusätzen denkbar ist, wird bei dieser verfahrensmäßigen Modifikation der vorliegenden Erfindung der in Ausgestaltung vorgesehene Zusatzstoff Zement oder/und Kalkhydrat weitgehend oder völlig durch Silikate (bevorzugt - wie ausgeführt - Fällungskieselsäuren od.dgl.) ersetzt.

Eine zusätzliche Vergütung ist durch eine Zugabe von Harnstoff zu erzielen. Dabei geht vermutlich der in den organischen Bestandteilen der Gewässersedimente enthaltene Kohlenstoff mit dem Harnstoff bestimmte chemische Verbindungen ein, die zu einer (weiteren) Verfestigung führen.

Bevorzugte Ausgestaltungen der vorliegenden Erfindung sind in Unteransprüchen beschrieben.

Das erfindungsgemäße Verfahren wird nachstehend anhand einer stark schematisierten Zeichnung noch weiter wie folgt erläutert:

Die aus einem Gewässer 1 wie bspw. einem Hafenbecken, einer Fahrrinne od.dgl. mittels eines (Eimerketten-)Baggers 2 od.dgl. ausgebaggerten Gewässersedimente 3 werden zunächst in geeigneter Weise einem Trockenfeld 4 zugeführt und dort auf natürliche Weise (insbesondere durch Verdunstung) bis auf wenigstens 120 % Wassergehalt (bezogen auf das Trockengewicht der Sedimente 3) entwässert.

Soll aus bestimmten Gründen eine ggf. erheblich stärkere Entwässerung auf bspw. 70 oder 50 % erfolgen (bspw. weil die aufzubereitenden Gewässersedimente nach der Aufbereitung nicht nur umweltfreundlich und dauerfest auf Halde deponiert, sondern als Baumaterial verwendet werden sollen), kann ggf. vor der weiteren Aufbereitung noch eine mechanische (Nach-)Entwässerung stattfinden, oder die ausgebaggerten Gewässersedimente 3 können auch ohne vorherige natürliche Entwässerung einer mechanischen Entwässerung zugeführt werden.

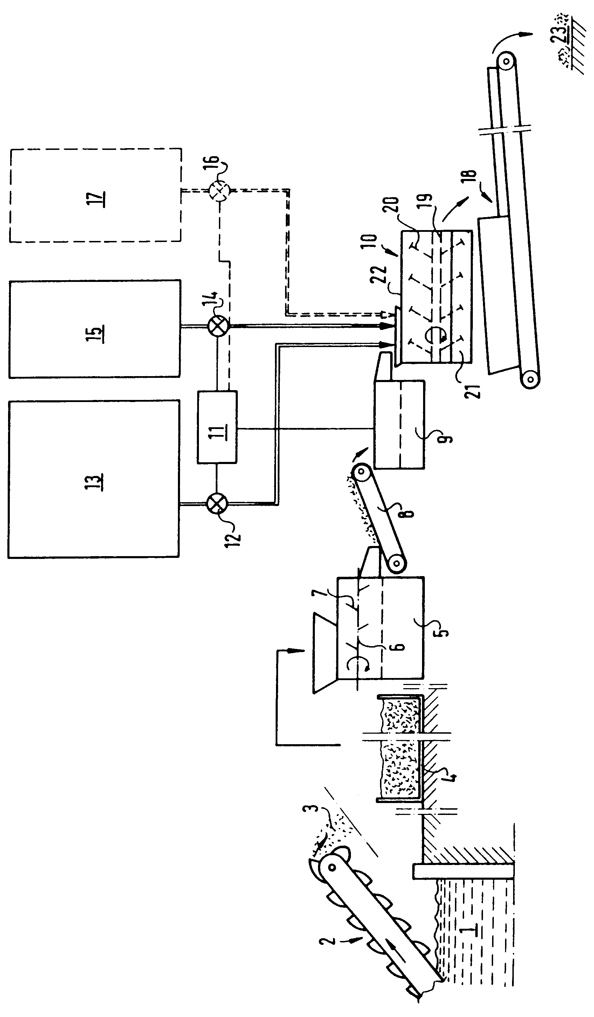

Nachdem die Gewässersedimente den vorgegebenen Entwässerungsgrad erreicht haben, werden sie einem Shredder 5 zugeführt, der mit (wenigstens) einer in der Zeichnung lediglich mit einer strichpunktierten Linie angedeuteten Welle 6 versehen ist, auf welcher messerartige Zerkleinerungselemente 7 angeordnet sind, welche die entwässerten Gewässersedimente 3 (vor-)zerkleinern, dabei (vor-)homogenisieren und zugleich belüften.

Die entwässerten, zerkleinerten, belüfteten und damit auch homogenisierten aufzubereitenden Gewässersedimente gelangen danach mittels eines Förderers 8 zu einer Wiegeeinrichtung 9, bei welcher es sich im Hinblick auf den kontinuierlich angestrebten Aufbereitungsbetrieb um eine Bandwaage od.dgl. handelt und von der Wiegeeinrichtung 9 in einen Doppelwellen-Zwangsmischer 10 mit Mischwellen 19, 19, deren Drehzahl veränderbar ist, um sie der jeweiligen Konsistenz des Mischgabes in optimales Weise anpassen zu können.

Zugleich gelangen von der Wiegeeinrichtung 9 (elektrische) Signale, welche die zeitliche Menge des dem Mischer 10 zugeführten Sedimentmaterials angeben, zu einer Steuereinheit 11, welche diese (Mengen-)Signale nicht nur u.a. registriert, sondern auch rechnerisch verarbeitet und ihrerseits Steuersignale an eine Auslaßeinrichtung 12 in der Art einer Zellenschleuse od.dgl. weitergibt, der einen Vorratsbehälter 13 für kaolinitisches Tonmehl nachgeordnetet ist und von der Steuereinheit 11 so gesteuert wird, daß dem Mischer 10 bzw. dem ihm zugeführten Gewässersedimentmaterial 3 jeweils kontinuierlich eine bestimmte Menge kaolinitischen Tonmehls zugegeben wird, und zwar bei dem dargestellten Ausführungsbeispiel 9 % kaolinitisches Tonmehl (bezogen auf die Trockenmasse der Gewässersedimente), wobei diese Menge, die zwischen 4 und 15 % liegen kann, im vorliegenden Fall ausreicht, weil die Gewässersedimente relativ stark entwässert worden sind, so daß der Wassergehalt etwa bei 90 % liegt.

Außerdem steuert die Steuereinheit 11 eine Auslaßeinrichtung 14 eines Vorratsbehälters 15, in dem sich Zement befindet, wobei den Gewässersedimenten 3 im Mischer 10 - gleichsam als "Starter" zur alsbaldigen Erwirkung einer ausreichenden Materialfestigkeit nach Aufbereitung - 5,5 % Zement (bezogen auf das Gewicht der Sedimentstrockenmasser) zugegeben wird.

Es sei noch darauf verwiesen, daß die Steuereinheit 11 weiterhin mit einer Auslaßeinrichtung 16 eines Vorratsbehälters 17 in Funktionsverbindung steht, in dem sich Kalkhydrat befindet, welches den aufzubereitenden Gewässersedimenten 3 sowie dem kaolinitischen Tonmehl und ggf. dem Zement ggf. wahlweise gesteuert bzw. dosiert zugegeben werden kann, und zwar - wie bei der Komponente Zement - je nach Beschaffenheit des Aufbereitungsgutes einerseits und dessen Bestimmungszwecks andererseits in einer Menge zwischen ca. 1 und 15 % (wiederum bezogen auf das Trockengewicht der Gewässersedimente), wobei bei dem dargestellten Ausführungsbeispiel Kalkhydrat indes nicht zum Einsatz kommt.

Es sei noch darauf verwiesen, daß das den aufzubereitenden Gewässersedimenten 3 auf dem Vorratsbehälter 13 dosiert zugeführte kaolinitische Tonmehl bei einer Mahlfeinheit von 0 bis ca. 1,4 mm etwa 70 % Kornanteil im Bereich von 0 bis 0,002 mm enthält.

Aus dem Mischer 10 gelangt das im wesentliche fertig aufbereitete Gut über einen Förderer 18 zu einer Zwischenlagerstelle 23, wird dort drei Tage witterungsgeschützt zwischengelagert und sodann als Dichtungsmasse weiterverwendet.

Dabei sei noch darauf verwiesen, daß die an den beiden Wellen 19 des Mischers 10 angeordneten Schaufeln 20 während des Betriebes (die beiden Wellen 19, 19 liegen horizontal nebeneinander) so ineinandergreifen, daß sie gegenseitig gleichsam in der Art von Abstreifern eine Selbstreinigungswirkung entfalten.

Weiterhin sei darauf verwiesen, daß der Aufbereitungsprozeß keineswegs kontinuierlich durchgeführt werden muß. Vielmehr kann es sogar zweckmäßig sein, ihn diskontinuierlich durchzuführen, und zwar insbesondere im Hinblick auf die angestrebte innige und homogene Vermischung der einzelnen Materialkomponenten im Mischer 10 sowie die nachfolgend erforderliche Entleerung. Bei einer diskontinuierlichen Arbeitsweise kann der Boden 21 des im wesentlichen zylindrischen Mischergehäuses 22 über einen Bogenwinkel von 120° geöffnet werden, so daß sich im Vergleich zu bekannten Doppelwellen-Zwangsmischern eine etwa vierfach so große Auslaßöffnung ergibt und eine problemlose Entleerung möglich ist.

Wie bereits weiter oben angedeutet worden ist, sind zahlreiche weitere Modifikationen sowohl verfahrensmäßig als auch einrichtungsmäßig möglich. So kann bspw. statt der Zuschlagstoffe Zement und/oder Kalkhydrat ein Silikat wie insbesondere industrielle Fällungskieselsäure und/oder Harnstoff als "Starter" zugegeben werden, und zwar zweckmäßigerweise ebenfalls in den Mischer 10, und zwar vorzugsweise bei diskontinuierlichem Betrieb, um eine sehr homogene Mischung herstellen zu können.

BEZUGSZEICHENLISTE

(LIST OF REFERENCE NUMERALS)

1  Gewässer
2  Bagger

EP 0 500 199 B1

3   Gewässersedimente
4   Trockenfeld
5   Shredder
6   Shredderwelle
7   Zerkleinerungselemente
8   Förderer
9   Wiegeeinrichtung
10  Mischer
11  Steuereinheit
12  Auslaßeinrichtung (von 13)
13  Vorabbehälter
14  Auslaßeinrichtung (von 15)
15  Vorratsbehälter
16  Auslaßeinrichtung
17  Vorratsbehälter
18  Förderer
19  Wellen
20  Schaufeln
21  Boden
22  Mischergehäuse

**Patentansprüche**

1. Verfahren zum Aufbereiten von kontaminierten Gewässersedimenten zu einem dauerhaft umweltverträglich auf einer Haldendeponie deponierbaren Material bzw. einem umweltverträglichen Baumaterial, insbesondere für Dichtungsschichten, dadurch gekennzeichnet, daß die zu konditionierenden kontaminierten Gewässersedimente auf einen Wassergehalt von maximal ca. 140 % bezogen auf ihr Trockengewicht entwässert werden; daß die insoweit entwässerten Gewässersedimente weitgehend homogen zerkleinert werden; und daß die zerkleinerten Gewässersedimente mit - bezogen auf ihr Trockengewicht - ca. 4 bis 15 % kaolinitischem Tonmehl zu einer Sediment-Kaolinit-Mischung homogen vermischt werden.

2. Verfahren nach Anspruch 1, dadurch gekennzeichnet, daß die Gewässersedimente zunächst auf einen Wassergehalt von ca. 120 % entwässert werden.

3. Verfahren nach Anspruch 1 oder 2, dadurch gekennzeichnet, daß die Gewässersedimente vor dem Vermischen mit dem kaolinitischen Tonmehl belüftet werden.

4. Verfahren nach Anspruch 3, dadurch gekennzeichnet, daß das Belüften der Gewässersedimente beim Zerkleinern erfolgt.

5. Verfahren nach einem oder mehreren der vorhergehenden Ansprüche, gekennzeichnet durch ein karbonatfreies kaolinitisches Tonmehl.

6. Verfahren nach einem oder mehreren der vorhergehenden Ansprüche, gekennzeichnet durch ein kaolinitisches Tonmehl mit einer Mahlfeinheit von 0 bis ca. 1,5 mm.

7. Verfahren nach einem oder mehreren der vorhergehenden Ansprüche, insbesondere nach Anspruch 6, gekennzeichnet durch ein kaolinitisches Tonmehl mit mindestens ca. 70 % Kornanteil von 0 bis 0,002 mm.

8. Verfahren nach einem oder mehreren der vorhergehenden Ansprüche, insbesondere zum Herstellen eines Baumaterials bspw. für Randdämme, Straßenbefestigungen u.dgl., welches nach der Aufbereitung unverzüglich eine dauerhafte erhöhte Festigkeit aufweisen soll, dadurch gekennzeichnet, daß der (Sediment-Kaolinit-)Mischung bezogen auf das Trockengewicht der Gewässersedimente ca. 1 bis 15 % Kalkhydrat homogen zugemischt werden, wobei die Kalkhydratzugabe bei hohem Wassergehalt entsprechend höher ist als bei einem niedrigeren Wassergehalt.

9. Verfahren nach einem oder mehreren der vorhergehenden Ansprüche, insbesondere einem oder mehreren der Ansprüche 1 bis 5, insbesondere zum Herstellen eines Baumaterials bspw. für Randdämme, Straßenbefestigungen u.dgl., welches nach der Aufbereitung unverzüglich eine dauerhafte erhöhte Festigkeit aufweisen soll, dadurch gekennzeichnet, daß der (Sediment-Kaolinit-)Mischung - bezogen auf das Trockengewicht der Gewässersedimente

5

- ca. 1 bis 15 % Zement zugemischt werden, wobei die Zementzugabe bei hohem Wassergehalt entsprechend höher ist als bei einem niedrigen Wassergehalt.

10. Verfahren nach Anspruch 6 und 7 zur Gewinnung eines Baumaterials für Dichtungsschichten, dadurch gekennzeichnet, daß der (Sediment-Kaolinit-)Mischung - bezogen auf das Trockengewicht der eingesetzten Gewässersedimente - ca. 1 bis 8 % Kalkhydrat und ca. 1 % Zement zugemischt werden.

11. Verfahren nach einem oder mehreren der Ansprüche 1 bis 9 zur Herstellung eines dauerhaft umweltverträglich deponierfähigen Materials, dadurch gekennzeichnet, daß der (Sediment-Kaolinit-)Mischung bezogen auf das Trockengewicht der eingesetzten Gewässersedimente ca. 1 bis 15 % Kalkhydrat und ca. 1 bis 15 % Zement zugemischt werden.

12. Verfahren nach einem oder mehreren der vorhergehenden Ansprüche, dadurch gekennzeichnet, daß die erhaltene Mischung vor einer Deponierung bzw. Weiterverarbeitung als Baumaterial zwischengelagert wird.

13. Verfahren nach Anspruch 12, dadurch gekennzeichnet, daß die Zwischenlagerung sich über wenigstens einen Tag erstreckt.

14. Verfahren nach Anspruch 12 oder 13, dadurch gekennzeichnet, daß das Aufbereitungsgut bei der Zwischenlagerung vor Witterungseinflüssen, insbesondere Niederschlägen, geschützt wird.

15. Verfahren nach einem oder mehreren der vorhergehenden Ansprüche, insbesondere einem oder mehreren der Ansprüche 1 bis 6, dadurch gekennzeichnet, daß die zerkleinerten und vorzugsweise belüfteten Gewässersedimente mit feinkörnigen und/oder flüssigen Silikaten homogen vermischt werden.

16. Verfahren nach Anspruch 15, dadurch gekennzeichnet, daß die zerkleinerten und vorzugsweise belüfteten Gewässersedimente mit einer Fällungskieselsäure homogen vermischt werden.

17. Verfahren nach Anspruch 16, gekennzeichnet durch einen Zusatz von bis zu ca. 3 % Fällungskieselsäure bezogen auf das Trockengewicht der eingesetzten Gewässersedimente.

18. Verfahren nach Anspruch 17, gekennzeichnet durch einen Zusatz von 0,2 bis 1,5 % Fällungskieselsäure bezogen auf das Trockengewicht der eingesetzten Gewässersedimente.

19. Verfahren nach einem oder mehreren der vorhergehenden Ansprüche, insbesondere einem oder mehreren der Ansprüche 15 bis 18, dadurch gekennzeichnet, daß die zerkleinerten Gewässersedimente mit Harnstoff homogen vermischt werden.

## Claims

1. Method for treating contaminated water sediments to produce a material which can be dumped on a waste dump in a permanently environmentally compatible form or an environmentally compatible building material, in particular for sealing layers, characterised in that the contaminated water sediments which are to be conditioned are dewatered to a maximum water content of approximately 140%, related to their dry weight; that the water sediments which are so far dewatered are largely homogeneously comminuted; and that the comminuted water sediments are homogeneously mixed with approximately 4 to 15% finely ground kaolinitic clay - related to their dry weight - to form a sediment-kaolinite mixture.

2. Method according to claim 1, characterised in that the water sediments are firstly dewatered to a water content of approximately 120%.

3. Method according to claim 1 or 2, characterised in that the water sediments are aerated before being mixed with the finely ground kaolinitic clay.

4. Method according to claim 3, characterised in that the water sediments are aerated while being comminuted.

5. Method according to one or more of the preceding claims, characterised by a carbonate-free finely ground kaolinitic clay.

6. Method according to one or more of the preceding claims, characterised by a finely ground kaolinitic clay with a fineness of grind of 0 to approximately 1.5 mm.

7. Method according to one or more of the preceding claims, in particular according to claim 6, characterised by a finely ground kaolinitic clay with at least approximately 70% of the grain being of a size from 0 to 0.002 mm.

8. Method according to one or more of the preceding claims, in particular for producing a building material, e.g. for embankments, road surfaces and the like, which is to have a permanently increased strength immediately after the treatment, characterised in that approximately 1 to 15% calcium hydroxide - related to the dry weight of the water sediments - are homogeneously mixed with the (sediment-kaolinite) mixture, the amount of calcium hydroxide added being correspondingly higher with a high water content than with a lower water content.

9. Method according to one or more of the preceding claims, in particular one or more of claims 1 to 5, in particular for producing a building material, e.g. for embankments, road surfaces and the like, which is to have a permanently increased strength immediately after the treatment, characterised in that approximately 1 to 15% cement - related to the dry weight of the water sediments - are mixed with the (sediment-kaolinite) mixture, the amount of cement added being correspondingly higher with a high water content than with a lower water content.

10. Method according to claims 6 and 7 for obtaining a building material for sealing layers, characterised in that approximately 1 to 8% calcium hydroxide and approximately 1% cement - related to the dry weight of the water sediments used - are mixed with the (sediment-kaolinite) mixture.

11. Method according to one or more of claims 1 to 9 for producing a material which can be dumped in a permanently environmentally compatible form, characterised in that approximately 1 to 15% calcium hydroxide and approximately 1 to 15% cement - related to the dry weight of the water sediments used - are mixed with the (sediment-kaolinite) mixture.

12. Method according to one or more of the preceding claims, characterised in that the mixture which is obtained is stored on an intermediate basis before being dumped or further treated as building material.

13. Method according to claim 12, characterised in that the intermediate storage extends over at least one day.

14. Method according to claim 12 or 13, characterised in that the treatment product is protected from atmospheric influences, in particular precipitation, during the intermediate storage.

15. Method according to one or more of the preceding claims, in particular one or more of claims 1 to 6, characterised in that the comminuted and preferably aerated water sediments are homogeneously mixed with fine-grained and/or liquid silicates.

16. Method according to claim 15, characterised in that the comminuted and preferably aerated water sediments are homogeneously mixed with a precipitating silicic acid.

17. Method according to claim 16, characterised by an addition of up to approximately 3% precipitating silicic acid, related to the dry weight of the water sediments used.

18. Method according to claim 17, characterised by an addition of 0.2 to 1.5% precipitating silicic acid, related to the dry weight of the water sediments used.

19. Method according to one or more of the preceding claims, in particular one or more of claims 15 to 18, characterised in that the comminuted water sediments are homogeneously mixed with urea.

## Revendications

1. Procédé pour le traitement d'alluvions contaminées en un matériau pouvant être déchargé, de façon compatible à long terme avec l'environnement, sur un dépôt en terril, ou en un matériau de construction compatible avec l'environnement, en particulier pour chapes d'étanchéité, caractérisé en ce que les alluvions contaminées à conditionner sont déshydratées à une teneur en eau d'au maximum environ 140 % par rapport à leur poids sec; en ce que les alluvions ainsi déshydratées sont broyées de façon pratiquement homogène; et en ce que les alluvions broyées sont mélangées de façon homogène avec - par rapport à leur poids sec - environ 4 à 15 % d'argile kaolinique en poudre, pour donner un mélange de sédiment et de kaolinite.

2. Procédé selon la revendication 1, caractérisé en ce que les alluvions sont d'abord déshydratées à une teneur en eau d'environ 120 %.

3. Procédé selon la revendication 1 ou 2, caractérisé en ce que les alluvions sont aérées avant le mélange avec l'argile kaolinique en poudre.

4. Procédé selon la revendication 3, caractérisé en ce que l'aération des alluvions s'effectue lors du broyage.

5. Procédé selon une ou plusieurs des revendications précédentes, caractérisé par une argile kaolinique en poudre exempte de carbonate.

6. Procédé selon une ou plusieurs des revendications précédentes, caractérisé par une argile kaolinique en poudre ayant une finesse de broyage de 0 à environ 1,5 mm.

7. Procédé selon une ou plusieurs des revendications précédentes, en particulier selon la revendication 6, caractérisé par une argile kaolinique en poudre ayant une proportion d'au moins environ 70 % de grains de 0 à 0,002 mm.

8. Procédé selon une ou plusieurs des revendications précédentes, en particulier pour la production d'un matériau de construction, par exemple, pour terrassements, stabilisations de routes et similaires, qui doit présenter, immédiatement après le traitement, une résistance mécanique accrue durable, caractérisé en ce que l'on incorpore de façon homogène au mélange de sédiment et de kaolinite, par rapport au poids sec de l'alluvion, environ 1 à 15 % d'hydroxyde de calcium, la quantité ajoutée d'hydroxyde de calcium étant plus élevée dans le cas d'une forte teneur en eau que dans le cas d'une plus faible teneur en eau.

9. Procédé selon une ou plusieurs des revendications précédentes, en particulier une ou plusieurs des revendication 1 à 5, en particulier pour la production d'un matériau de construction ou pour terrassements, stabilisations de routes et similaires, qui doit présenter, immédiatement après le traitement, une résistance mécanique accrue de façon durable, caractérisé en ce que l'on ajoute au mélange de sédiment et de kaolinite - par rapport au poids sec de l'alluvion - environ 1 à 15 % de ciment, la quantité de ciment ajoutée étant plus élevée dans le cas d'une forte teneur en eau que dans le cas d'une faible teneur en eau.

10. Procédé selon les revendications 6 et 7, pour l'obtention d'un matériau de construction pour chapes d'étanchéité, caractérisé en ce que l'on ajoute au mélange de sédiment et de kaolinite - par rapport au poids sec de l'alluvion utilisée - environ 1 à 8 % d'hydroxyde de calcium et environ 1 % de ciment.

11. Procédé selon une ou plusieurs des revendications 1 à 9, pour la production d'un matériau pouvant être déchargé de façon compatible à long terme avec l'environnement, caractérisé en ce que l'on ajoute au mélange de sédiment et de kaolinite - par rapport au poids sec de l'alluvion utilisée - environ 1 à 15 % d'hydroxyde de calcium et environ 1 à 15 % de ciment.

12. Procédé selon une ou plusieurs des revendications précédentes, caractérisé en ce que le mélange obtenu est déposé de façon intermédiaire avant une décharge ou un retraitement en tant que matériau de construction.

13. Procédé selon la revendication 12, caractérisé en ce que le dépôt intermédiaire s'étend sur au moins un jour.

14. Procédé selon la revendication 12 ou 13, caractérisé en ce que, lors du dépôt intermédiaire, le produit de traitement est protégé contre les intempéries, en particulier les précipitations.

15. Procédé selon une ou plusieurs des revendications précédentes, en particulier une ou plusieurs des revendications 1 à 6, caractérisé en ce que les alluvions broyées et de préférence aérées sont mélangées de façon homogène avec des silicates liquides et/ou à grains fins.

16. Procédé selon la revendication 15, caractérisé en ce que les alluvions broyées et de préférence aérées sont mélangées de façon homogène avec un acide silicique précipité.

**17.** Procédé selon la revendication 16, caractérisé par une addition de jusqu'à environ 3 % d'acide silicique précipité, par rapport au poids sec de l'alluvion utilisée.

**18.** Procédé selon la revendication 17, caractérisé par une addition de 0,2 à environ 1,5 % d'acide silicique précipité, par rapport au poids sec de l'alluvion utilisée.

**19.** Procédé selon une ou plusieurs des revendications précédentes, en particulier une ou plusieurs des revendications 15 à 18, caractérisé en ce que l'alluvion broyée est mélangée de façon homogène avec de l'urée.